# EUROPÄISCHE PATENTSCHRIFT

(11) **EP 1 010 966 B1**
(45) Veröffentlichungstag und Bekanntmachung des Hinweises auf die Patenterteilung: **23.10.2002**
(21) Anmeldenummer: 99123877.5
(22) Anmeldetag: 02.12.1999
(51) Int. Cl.: G01C 11/06

(54) **Verfahren zur Erzeugung einer drei-dimensionalen Objektbeschreibung**
Method for generating a three dimensional object description
Méthode pour générer une description tridimensionelle d' un objet

(30) Priorität: 15.12.1998 DE 19857667
(43) Veröffentlichungstag der Anmeldung: 21.06.2000
(73) Patentinhaber: Aerowest GmbH, 44135 Dortmund (DE)
(72) Erfinder: Hartfiel, Paul Dr.-Ing, 32257 Bünde (DE); Rössmann, Heinrich, 48159 Münster (DE); Benfer, Hans Joachim, 44379 Dortmund (DE)
(74) Vertreter: Behrendt, Arne, Dipl.-Ing.

(56) Entgegenhaltungen:
- DE-A- 4 419 359
- DE-A- 19 719 620

## Beschreibung

Die vorliegende Erfindung bezieht sich auf ein Verfahren zur Erzeugung einer dreidimensionalen Objektbeschreibung eines lokalisierten räumlichen Objekts- insbesondere eines Gebäudes - aus stereoskopischen Luftbildpaaren, bei dem
- von den Luftbildpaaren zweidimensionale Bilddaten und stereoskopische Parameterdaten digitalisiert als dreidimensionale Rohdaten in einer Datenverarbeitungsanlage gespeichert werden,
- aus den Rohdaten zweidimensionale Orthophoto-Daten und dreidimensionale Objektdaten berechnet werden,
- den dreidimensionalen Objektdaten externe objektspezifische Sachdaten zur Bildung einer dreidimensionalen Objektbeschreibung zugeordnet werden.

Gegenstand dieser Meßverfahren ist die dreidimensionale Beschreibung von auf der Erdoberfläche befindlichen, räumlichen Objekten, insbesondere von räumlich begrenzten Grundstücken und Bauwerken, wie etwa Straßen, Wohnund Industriebauten oder sonstigen Gebäuden, anhand von Luftbildern. Dadurch, daß von den Objekten jeweils stereoskopische Luftbildpaare, d.h. jeweils zwei Luftbilder in stereoskopischer Überdeckung, aufgenommen werden, erhält man Sätze von zweidimensionalen, geometrischen Bilddaten sowie Parameterdaten, die hochgenaue Angaben über die relativen Aufnahmewinkel der Luftbildpaare, absolute Aufnahmekoordinaten und weitere Aufnahmeparameter enthalten. Diese Daten bilden die Rohdaten zur Berechnung realitätstreuer, orientierter Darstellungen der Erdoberfläche. Durch Einscannen der .einzelnen Luftbilder in eine elektronische Datenverarbeitungsanlage erhält man digitale, zweidimensionale Bilddaten. Unter Berücksichtigung der stereoskopischen Parameterdaten werden daraus durch Aerotriangulation orientierte Luftbilder mit Höheninformation berechnet. Auf diese Weise werden aus den ursprünglich vorliegenden Rohdaten dreidimensionale Objektdaten gewonnen, die eine dreidimensionale Objektbeschreibung bilden.

Die dreidimensionalen Objektdaten werden bislang in Datenverarbeitungsanlagen gespeichert und stehen für weitere Auswertungen zur Verfügung. Aus dem gesamten dreidimensionalen Objektdatenbestand, der durch luftbildmäßige Erfassung einer Stadt oder eines Stadtteils anfällt, werden beispielsweise topographische Karten, Verkehrswegepläne, digitale Geländemodelle einschließlich dreidimensionaler Präzisionspunktbestimmungen erstellt. Die erreichbare Meßgenauigkeit erlaubt es dabei ohne weiteres, Gebäude und Gebäudeteile zur Gewinnung von Eckdaten für bautechnische und architektonische Maßnahmen mit hinreichender Genauigkeit zu erfassen und darzustellen. Beispielsweise können zur Sanierung eines Hausdachs alle relevanten Angaben, wie Dachform, Dachfläche, Dachneigung einschließlich eventueller Besonderheiten hinreichend präzise ermittelt werden, so daß anhand dieser Angaben bereits die Erstellung eines Aufmaßes möglich ist.

Im Stand der Technik wird ein Verfahren der eingangs genannten Art zur Erfassung und Auswertung von Luftbilddaten in der DE 44 19 359 A1 beschrieben. Dieses sieht vor, daß anhand von Luftbildpaaren durch Anwendung der vorangehend erläuterten Verfahrensschritte dreidimensionale Modelle der Erdoberfläche nebst orthophotografischer Projektionen davon erstellt werden. Darin wird weiterhin auf die bereits bekannte Möglichkeit hingewiesen, die aus den Luftbilddaten gewonnenen dreidimensionalen Objektdaten mit externen objektspezifischen Sachdaten, beispielsweise vorhandenen Katasterlinien, zu verknüpfen.

Der vorangehend erläuterte Stand der Technik weist zwar bereits darauf hin, einen durch luftbildgestützte Messungen ermittelten, dreidimensionalen Objektdatenbestand mit externen Sachdaten zu kombinieren und potentiellen Nutzern auf Datenträgern gespeichert zur Verfügung zu stellen. Ein wesentlicher Nachteil dieses Verfahrens, welches in seiner Grundform im übrigen bereits seit langem in der Fotogrammetrie zur kartographischen Erfassung eingesetzt wird, liegt jedoch darin, daß außerordentlich umfangreiche Objektdatenbestände geschaffen werden, die im Hinblick auf den erforderlichen technischen Aufwand nicht unproblematisch sind. Der bei der Aufbereitung der gesamten Rohdaten anfallende Rechenaufwand zur Erzeugung eines vollständigen dreidimensionalen Objekt-Datenbestands ist erheblich und erfordert entsprechend leistungsfähige Datenverarbeitungsanlagen. Die dabei erhaltenen Datenmengen lassen sich zwar grundsätzlich auf Datenträgern hoher Kapazität, etwa CD-ROMs, speichern. Eine Datenübertragung über zur Zeit verfügbare Datenleitungen mit üblicher Kapazität, beispielsweise Telefonleitungen, ist jedoch ausgesprochen langwierig und in der Praxis kaum umsetzbar-Schließlich ist die Erzeugung umfangreicher, strukturierter Datensätze unter datenschutzrechtlichen Gesichtspunkten unter Umständen bedenklich.

Auch die DE 197 19 620 A1 betrifft ein Verfahren zur computergestützten Erstellung, Bearbeitung und Nutzung von Luftbilddaten. Das Verfahren gemäß dieser Druckschrift geht allerdings nicht wesentlich über das hinaus, was bereits von der oben genannten DE 44 19 359 A1 gelehrt wird. Ausweislich der DE 197 19 620 A1 werden ebenfalls zunächst analoge Luftbildaufnahmen durch Scannen in ein Computersystem eingegeben. Den Bilddaten sind dabei GPS-Positionsdaten zugewiesen, welche die Identifizierung von einzelnen Objekten in dem erfaßten Bereich möglich machen. Nun erfolgt durch das Computersystem ausgehend von den gescannten Luftbildern die Erstellung und Speicherung von dreidimensionalen Modelldaten. In der deutschen Offenlegungsschrift ist von "Objektdaten" die Rede, da diese Daten, anders als bei dem Verfahren gemäß der DE 44 19 359 A1, einzelnen Bildobjekten, wie beispielsweise Gebäuden, Dörfern, Flurstücken etc., zugeordnet sind. Durch diese Zuordnung ist die Datenmenge der einzelnen dreidimensionalen Objektdatensätze beschränkt, was die Verfügbarmachung erleichtert und auch eine interaktive Nutzung über das Internet ermöglicht. Der Benutzer hat über das Internet Zugriff auf die Luftbilddaten, indem er die Objektdaten des ihn interessierenden Objektes über das Datennetz auf seinen PC überträgt und dort interaktiv auswertet.

Auch bei diesem vorbekannten Verfahren ist jedoch weiterhin nachteilig, daß die Erstellung der Objektdaten extrem aufwendig und speicherplatzintensiv ist. Es sind schnell arbeitende Workstations mit Speicherkapazitäten von mehr als 100 GB erforderlich sind. Nachteilig ist ferner, daß die interaktive Nutzung der Objektdaten spezielle Software auf Seiten des PC's des Benutzers erfordert. Diese Software ist proprietär und muß zunächst den potentiellen Nutzern zur Verfügung gestellt werden, was wiederum mit einigem Aufwand verbunden ist.

Der Erfindung liegt mithin die Aufgabenstellung zugrunde, die genannten Nachteile zu vermeiden und den erforderlichen Rechenaufwand zur Erzeugung von dreidimensionalen Objektbeschreibungen zu verringern und die dabei erzeugte Gesamt-Datenmenge so weit zu reduzieren, daß eine nutzerfreundliche Datenübertragung über Datenfernleitungen relativ geringer Kapazität ermöglicht wird. Insbesondere bezieht sich dies auf eine Handhabung von Luftbilddaten via Telefonleitungen im World-Wild-Web (Internet). Schließlich soll eine unter datenschutzrechtlichen Gesichtspunkten überschaubare Handhabung der Objektbeschreibungen möglich sein.

Zur Lösung der vorangehend dargestellten Aufgabe schlägt die Erfindung ausgehend vom Stand der Technik ein Verfahren mit folgenden Verfahrensschritten vor:
- Zuordnung externer objektspezifischer Sachdaten zu den zweidimensionalen Orthophoto-Daten zur Bildung objektspezifischer Orthophoto-Hybriddatensätze,
- Speicherung der Orthophoto-Hybriddatensätze auf einem Hostrechner einer netzförmigen Datenverarbeitungsanlage, der über Datenübertragungsleitungen an Client-Rechner angeschlossen ist,
- Übertragung der Orthophoto-Hybriddatensätze über die Datenübertragungsleitungen zu einem Client-Rechner,
- Auswahl eines objektspezifischen Orthophoto-Hybriddatensatzes beim Client-Rechner durch Eingabe der objektspezifischen Sachdaten,
- Übertragung der ausgewählten objektspezifischen Sachdaten über die Datenübertragungsleitungen zum Hostrechner,
- Berechnung eines objektspezifischen dreidimensionalen Objektdatensatzes aus den in dem Hostrechner gespeicherten dreidimensionalen Rohdaten, die dem ausgewählten objektspezifischen Orthophoto-Hybriddatensatz zugrunde liegen,
- Übertragung des dreidimensionalen Objektdatensatzes mit den objektspezifischen Sachdaten als dreidimensionale Objektbeschreibung über die Datenübertragungsleitungen zum Client-Rechner.

Ein besonderer Vorteil des erfindungsgemäßen Verfahrens resultiert daraus, daß nicht, wie bislang üblich, ein vollständiger dreidimensionaler Objektdatenbestand erzeugt wird, sondern zunächst lediglich ein zweidimensionaler Orthophoto-Datenbestand, also eine flächentreue zweidimensionale Projektion. Der datentechnische Aufwand bei der Erzeugung, Handhabung und Speicherung dieser zweidimensionalen Bilddaten ist deutlich geringer, als wenn die anfallenden Rohdaten unmittelbar und vollständig dreidimensional aufbereitet würden.

Im nächsten Verfahrensschritt werden die Orthophoto-Daten durch Hinzuziehung externer Sachdaten strukturiert. Im Ergebnis werden dabei objektspezifische Orthophoto-Hybriddatensätze gebildet. Als Sachdaten kommen dabei beispielsweise Katasterdaten, Straßen- und/oder sonstige Gebäudedaten in Frage. Auf diese Weise wird beispielsweise eine eindeutige Verknüpfung einer Adressangabe mit Straßennamen und Hausnummer zu einem bestimmten Gebäude hergestellt. Die zwei-dimensionalen Orthophoto-Daten werden zusammen mit diesen externen Sachdaten in jeweils einem dem spezifischen Objekt zugeordneten Orthophoto-Hybriddatensatz gespeichert.

Die vorgenannten Orthophoto-Hybriddatensätze werden im folgenden Verfahrensschritt auf einem Host-Rechner, d. h. einem Server, abgespeichert. Dieser ist über Datenübertragungsleitungen in eine netzförmige Datenverarbeitungsanlage eingebunden. Dies kann sowohl ein lokales Netzwerk in einem Unternehmen sein, als auch ein dezentrales, ausgedehntes Netzwerk, wie beispielsweise die globale Struktur des Internets. An die Datenübertragungsleitungen sind eine Vielzahl von Client-Rechnern angeschlossen, die über die Datenübertragungsleitungen Zugriff auf die Datenbestände des oder der Host-Rechner haben.

Die Orthophoto-Hybriddatensätze werden im nächsten Schritt auf Anfrage zu einem beliebigen, an das Netzwerk angeschlossenen Client-Rechner übertragen. Die überschaubare Datenmenge der zwei-dimensionalen Bilddaten ermöglicht es, großflächige Luftbildausschnitte selbst über Datenfernleitungen mit begrenzter Übertragungskapazität zu übermitteln. Es ist beispielsweise denkbar, auf Anfrage die Bilddarstellung einer Ortschaft oder eines Stadtteils via Internet, d. h. per Telefonleitung zum Kunden zu übertragen.

Der nächste Verfahrensschritt bezieht sich auf die Auswahl eines objektspezifischen Orthophoto-Hybriddatensatzes beim Client-Rechner. Dabei kann der Anwender am Client-Rechner, d. h. der Kunde, beispielsweise über die Eingabe der Adresse, ein bestimmtes Gebäude auswählen. Ein besonderer Vorteil des erfindungsgemäßen Verfahrens liegt darin, daß nun nicht mehr - wie bisher - mühselig in einem Luftbild ein Gebäude identifiziert werden braucht, sondern zur Auswahl lediglich die objektspezifischen Sachdaten eingegeben werden, beispielsweise Straßenname und Hausnummer. Dies ist zur Anwahl eines objektspezifischen Orthophoto-Hybriddatensatzes vollkommen ausreichend.

Die in dem vorangehenden Verfahrensschritt ausgewählten objektspezifischen Sachdaten werden nunmehr über die Datenübertragungsleitung vom Client-Rechner zum Host-Rechner übertragen. Dort stehen die gesamten ursprünglichen drei-dimensionalen Rohdaten in gespeicherter Form zur Verfügung.

Anhand des vom Client-Rechner durch Eingabe der objektspezifischen Sachdaten gesendeten Auftrags werden nun im Host-Rechner zunächst die drei-dimensionalen Rohdaten identifiziert, die dem am Client-Rechner ausgewählten objektspezifischen Orthophoto-Hybriddatensatz zugrunde liegen. Dies sind die Luftbilddaten und die Parameterdaten, beispielsweise eines Gebäudes bzw. eines Hausdachs. Aus den drei-dimensionalen Rohdaten wird nun im Host-Rechner eine drei-dimensionale Modellrechnung für das ausgewählte Objekt durchgeführt. Im Ergebnis wird dabei ein drei-dimensionaler Objektdatensatz erzeugt, der zusammen mit den objektspezifischen Sachdaten eine vollständige drei-dimensionale Objektbeschreibung aus der Luftperspektive bildet. Konkret kann eine solche drei-dimensionale Objektbeschreibung beispielsweise genaue Angaben zur Form und Fläche eines Hausdachs enthalten, einschließlich Daten zur Dachneigung, Anordnung und Größe von Fenstern und Kaminen und dergleichen. Durch die eindeutige Kombination mit den Sachdaten, wie Straße und Hausnummer, ist ein einfacher und eindeutiger Zugriff gewährleistet.

Schließlich werden die auf diese Weise aufbereiteten Objektdaten einschließlich der dazugehörigen Sachdaten als drei-dimensionale Objektbeschreibung über die Datenübertragungsleitungen zum Client übermittelt. An dieser Stelle erfolgt zwar eine Übertragung drei-dimensionaler Daten über die Datenübertragungsleitung, die unter Umständen eine geringe Übertragungskapazität haben kann. Die tatsächlich gesendete Datenmenge ist jedoch insofern relativ gering, da die Beschreibung sich lediglich auf ein spezifisches Objekt bezieht. Der technische Aufwand ist mithin an dieser Stelle ebenfalls wesentlich geringer als im Stand der Technik.

Zweckmäßigerweise enthalten die externen Sachdaten die bereits erwähnten Straßen- bzw. Katasterdaten. Für einen gegebenen Anwendungsfall können jedoch im Prinzip beliebige externe Daten, die in irgendeiner Form mit dem jeweiligen Objekt in Verbindung stehen, den Sachdaten hinzugefügt werden. Beispielsweise sind für bestimmte landwirtschaftliche Nutzungen klimatische bzw. meteorologische Daten interessant, während für die Erschließung von Wohn- oder Feriengebieten lokale Imissionsdaten von Bedeutung sein können. Je nach Anwendung kann die Hinzufügung weiterer externer Sachdaten sinnvoll sein.

Auf dem Client-Rechner kann eine grafische und/oder alphanumerische Darstellung der Objektbeschreibung erfolgen. Zweckmäßigerweise geht die Aufbereitung der Meßdaten im Host-Rechner so weit, daß eine weitere Bearbeitung beim Client nicht erforderlich ist. Beispielsweise erhält der Kunde weitgehende Maßangaben bezüglich eines Hausdachs, welche die Material- und Kostenkalkulation zur Sanierung eines Dachs durch einen Dachdecker betreffen.

Durch das erfindungsgemäße Verfahren wird erstmals breiten Anwenderkreisen die Möglichkeit an die Hand gegeben, Luftbilddaten zur räumlichen Messung und Beschreibung spezifischer Objekte zu nutzen. Dies erfolgt auf der Grundlage, daß zunächst eine zwei-dimensionale Aufbereitung der durch die Messung zunächst gewonnenen Rohdaten erfolgt. Die dabei erhaltene, begrenzte Datenmenge ist, nach der Strukturierung durch Integration externer Sachdaten, optimal zur Handhabung in einer netzförmigen, dezentralen Datenverarbeitungsanlage, insbesondere mit Übertragungsleitungen geringer Übertragungskapazität, wie beispielsweise dem Internet, optimal geeignet.

Eine besonders vorteilhafte Anwendung findet das erfindungsgemäße Verfahren bei der Planung von Hausdachsanierungen. In diesem Fall bildet das Dach des Gebäudes das Objekt, für das in der erfindungsgemäßen Weise eine räumliche Objektbeschreibung erstellt wird. Zweckmäßigerweise enthalten die Sachdaten in diesem Fall Straßendaten bezüglich dieses Gebäudes, d. h. Straßennamen zzgl. Hausnummer. Selbstverständlich können darin auch Katasterdaten bzw. -koordinaten enthalten sein.

Dabei kann die Bestimmung der Dachform und/oder der Dachfläche im Host-Rechner durch teil- oder vollautomatisierte Bildanalyseverfahren erfolgen. Damit entfällt eine zeitaufwendige manuelle Bearbeitung.

Vorzugsweise werden die Orthophoto-Daten auf dem Client-Rechner grafisch dargestellt. Diese Darstellung ist besonders benutzerfreundlich, wenn zugleich die Sachdaten der Orthophoto-Hybriddatensätze grafisch dargestellt, d. h. in die Orthophoto-Daten eingeblendet werden. In der vorangehend vorgeschlagenen Anwendung ist es beispielsweise denkbar, den Umriß von Dachflächen, welche die Objekte bilden, grafisch zu markieren, beispielsweise farblich hervortreten zu lassen. Diese Darstellung ist besonders benutzerfreundlich.

Bei einer bevorzugten Weiterbildung der grafischen Darstellung der Orthophoto-Hybriddatensätze werden nicht nur die Orthophoto-Hybriddaten und die Sachdaten gemeinsam grafisch auf dem Client-Rechner dargestellt, sondern sie bilden darüber hinaus eine grafische Benutzeroberfläche, wobei jeweils spezifische Orthophoto-Hybriddatensätze interaktiv grafisch auswählbar sind. Dies ermöglicht eine Benutzerführung, wie sie von modernen grafischen Benutzeroberflächen her bekannt ist. Konkret wird interaktiv ein Markierung, wie etwa ein Mausanzeiger, mittels entsprechender Eingabevorrichtungen über die auf dem Bildschirm dargestellte Grafik bewegt und beispielsweise die gewünschte Dachfläche durch Anklicken markiert. Damit wird bereits ein Auftrag zur Anfertigung einer Objektbeschreibung erteilt.

Zweckmäßige Weiterbildungen des erfindungsgemäßen Verfahrens sehen vor, daß jeweils vor der Übertragung von Daten über die Datenübertragungsleitungen eine Datenkompression angewendet wird, um die zu übertragende Datenmenge zu reduzieren.

Vorzugsweise wird vor der Berechnung und Übertragung der objektspezifischen, drei-dimensionalen Objektdaten eine Sicherheitsabfrage installiert, um unautorisierten Zugriff zu unterbinden. Damit läßt sich überdies eine Dienstleistung zur Ausmessung von Hausdächern über ein öffentliches Datennetz anbieten und abrechnen. Datenschutztechnischen Belangen kann dabei ebenfalls umfassend Rechnung getragen werden.

Das erfindungsgemäße Verfahren wird im folgenden anhand der Zeichnungen näher erläutert. Hierzu zeigen im einzelnen:
- Fig. 1:: eine zwei-dimensionale Orthophoto-Darstellung von Gebäudedächern;
- Fig. 2:: einen grafisch aufbereiteten Orthophoto-Hybriddatensatz gemäß Fig. 1;
- Fig. 3:: eine graphische Darstellung einer Dachauswertung;
- Fig. 4:: eine räumliche Darstellung einer drei-dimensionalen Objektbeschreibung des Gebäudes gemäß Fig. 3.

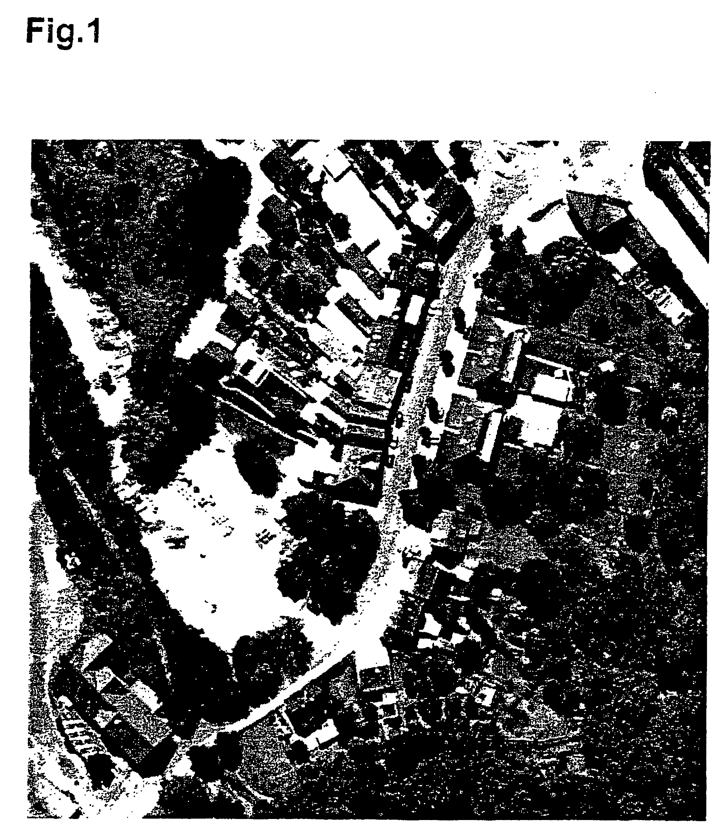

Fig. 1 zeigt die aus einem entsprechenden Luftbildpaar erzeugte, orthophotografische Darstellung einer Vielzahl von Hausdächern. Gemäß dem erfindungsgemäßen Verfahren ist dieses Bild in Form von zwei-dimensionalen Orthophoto-Daten in einem Host-Rechner gespeichert, der beispielsweise ans Internet angeschlossen ist.

Der dargestellte Bildausschnitt ist lediglich der Deutlichkeit halber gewählt. Am Client-Rechner, der über Datenleitungen an dem vorgenannten Host-Rechner angeschlossen ist, kann in dieser grafischen Darstellung beispielsweise die Abbildung einzelner Gebäude, einer Straße oder eines ganzen Stadtteils abgerufen werden.

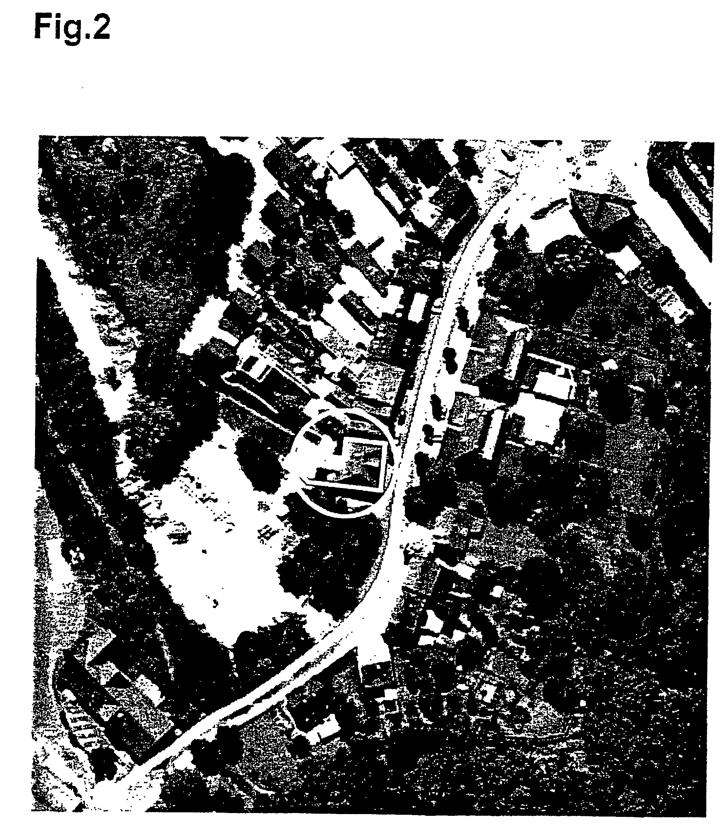

Die Orthophoto-Daten sind nach externen Sachdaten, beispielsweise Straßenangaben zzgl. Hausnummern strukturiert. In Fig. 2 ist der in Fig. 1 grafisch dargestellte Orthophoto-Datensatz durch Hinzuziehung solcher externen Sachdaten zu einem Orthophoto-Hybriddatensatz aufbereitet. Beispielhaft ist dabei ein Straßenzug durch die helle Linie grafisch hervorgehoben. Zusätzlich ist ein einzelnes Gebäude durch einen Kreis grafisch markiert. Der Kunde, d. h. der Endanwender am Client-Rechner hat bei Gestaltung einer entsprechenden Benutzeroberfläche die Möglichkeit, durch interaktive grafische Dateneingabe beispielsweise das mit dem Kreis markierte Gebäude auszuwählen.

Nach Auswahl des Gebäudes wird über die Datenleitungen ein Auftrag an den Host-Rechner gesendet. Anhand der dort vorliegenden drei-dimensionalen Rohdaten wird eine stereoskopische Modellbeschreibung des Daches berechnet. Mittels Bildanalyseverfahren ist es dabei möglich, die zur Sanierung notwendigen Informationen zur Beschreibung des Dachs - Dachfläche, Dachform, Firstlinien, Trauflinien, Schornsteine, Fenster, Dachaufbauten - mit hinreichender Genauigkeit zu ermitteln.

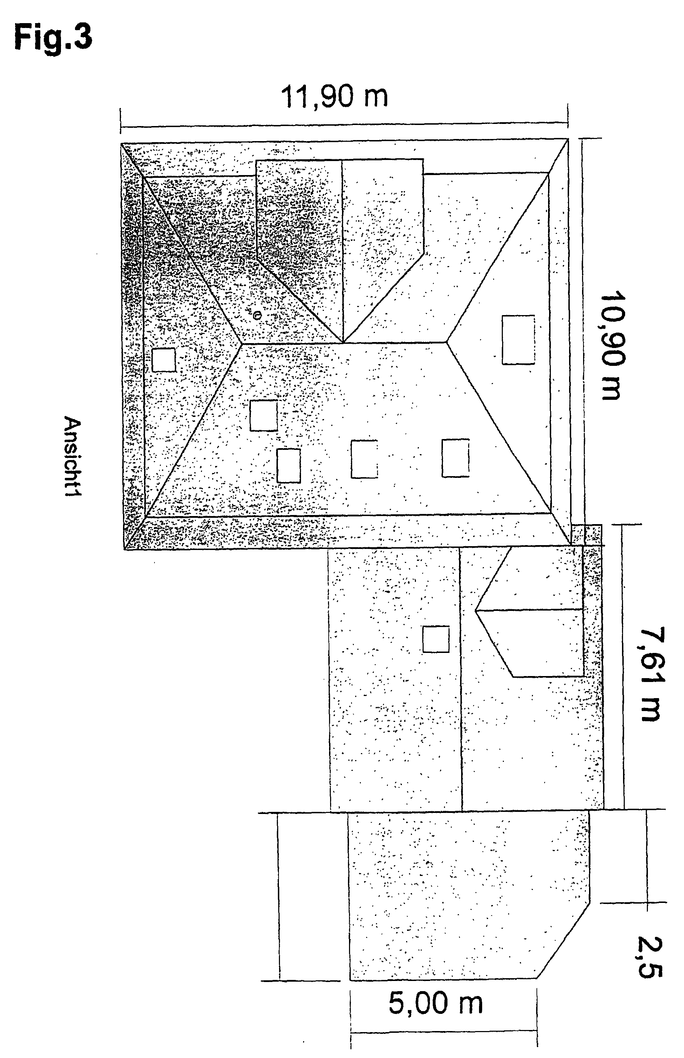

Der Orthophoto-Hybriddatensatz kann weiterhin zu einer technischen Graphik mit Angabe von Maßen aufbereitet werden, wie in Fig. 3 dargestellt.

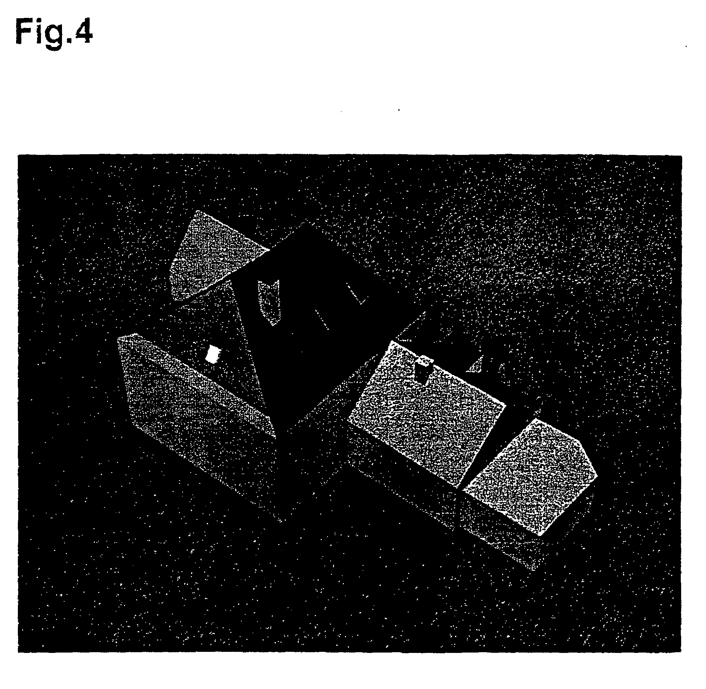

Die daraus errechnete drei-dimensionale Objektbeschreibung wird alternativ in einer flächigen, zwei-dimensionalen Graphik, wie in Fig. 3, und/oder in perspektivischer, räumlicher Darstellung, wie in Fig. 4, ausgegeben und zum Client-Rechner übermittelt. Zugleich werden die Sachdaten aufbereitet und alphanumerisch den übermittelten Bilddaten beigefügt. So wird beispielsweise die Dachfläche in m² angegeben, um einen ersten Eindruck über den Umfang einer notwendigen Dachsanierung zu geben.

Gegebenenfalls werden die zu übertragenden Daten komprimiert, um den Aufwand zu begrenzen. Zweckmäßigerweise sind Sicherheitsabfragen zwischengeschaltet, um unautorisierte Benutzung zu unterbinden und die Dienstleistung abrechnen zu können.

## Patentansprüche

1. Verfahren zur Erzeugung einer dreidimensionalen Objektbeschreibung eines lokalisierten, räumlichen Objekts - insbesondere eines Gebäudes - aus stereoskopischen Luftbildpaaren, bei dem
- von den Luftbildpaaren zweidimensionale Bilddaten und stereoskopische Parameterdaten digitalisiert als dreidimensionale Rohdaten in einer Datenverarbeitungsanlage gespeichert werden,
- aus den Rohdaten zweidimensionale Orthophoto-Daten und drei-dimensionale Objektdaten berechnet werden,
- den dreidimensionalen Objektdaten externe objektspezifische Sachdaten zur Bildung einer dreidimensionalen Objektbeschreibung zugeordnet werden,
**gekennzeichnet durch** die Verfahrensschritte:
- Zuordnung externer objektspezifischer Sachdaten zu den zweidimensionaten Orthophoto-Daten zur Bildung objektspezifischer Orthophoto-Hybriddatensätze,
- Speicherung der Orthophoto-Hybriddatensätze auf einem Host-Rechner einer netzförmigen Datenverarbeitungsanlage, der über Datenübertragungsleitungen an Client-Rechner angeschlossen ist,
- Übertragung der Orthophoto-Hybriddatensätze über die Datenübertragungsleitungen zu einem Client-Rechner,
- Auswahl eines objektspezifischen Orthophoto-Hybriddatensatzes beim Client-Rechner **durch** Eingabe der objektspezifischen Sachdaten,
- Übertragung der ausgewählten objektspezifischen Sachdaten über die Datenübertragungsleitungen zum Host- Rechner,
- Berechnung eines objektspezifischen dreidimensionalen Objektdatensatzes aus den in dem Host-Rechner gespeicherten dreidimensionalen Rohdaten, die dem ausgewählten objektspezifischen Orthophoto-Hybriddatensatz zugrunde liegen,
- Übertragung des dreidimensionalen Objektdatensatzes mit den objektspezifischen Sachdaten als dreidimensionale Objektbeschreibung über die Datenübertragungsleitungen zum Client-Rechner.

2. Verfahren nach Anspruch 1, **dadurch gekennzeichnet, daß** das Objekt das Dach eines Gebäudes ist.

3. Verfahren nach Anspruch 2, **dadurch gekennzeichnet, daß** die Sachdaten Straßendaten des Gebäudes enthalten.

4. Verfahren nach Anspruch 1, **dadurch gekennzeichnet, daß** die Sachdaten Katasterdaten enthalten.

5. Verfahren nach Anspruch 1, **dadurch gekennzeichnet, daß** die Orthophoto-Daten zumindest auf einem Client-Rechner grafisch dargestellt werden.

6. Verfahren nach Anspruch 1, **dadurch gekennzeichnet, daß** die Sachdaten der Orthophoto-Hybriddatensätze grafisch dargestellt werden.

7. Verfahren nach Anspruch 1, **dadurch gekennzeichnet, daß** die Orthophoto-Hybriddaten und die Sachdaten auf einem Client-Rechner gemeinsam in Form einer grafischen Benutzeroberfläche grafisch dargestellt werden, wobei ein spezifischer Orthophoto-Hybriddatensatz interaktiv grafisch auswählbar ist.

8. Verfahren nach Anspruch 1, **dadurch gekennzeichnet, daß** der Host-Rechner ein Internet-Server ist.

9. Verfahren nach Anspruch 1, **dadurch gekennzeichnet, daß** das Datennetz das World-Wide-Web ist.

10. Verfahren nach Anspruch 2, **dadurch gekennzeichnet, daß** im Host-Rechner durch zumindest teilautomatisierte Bildanalyseverfahren die Bestimmung der Dachform und/oder der Dachfläche erfolgt.

11. Verfahren nach Anspruch 1, **dadurch gekennzeichnet, daß** jeweils vor einer Übertragung von Daten über Datenübertragungsleitungen eine Datenkompression vorgenommen wird.

12. Verfahren nach Anspruch 1, **dadurch gekennzeichnet, daß** vor der Berechnung des objektspezifischen dreidimensionalen Objektdatensatzes eine Sicherheitsabfrage vorgeschaltet wird.

13. Verfahren nach Anspruch 1, **dadurch gekennzeichnet, daß** dem objektspezifischen dreidimensionalen Objektdatensatz weitere externe Sachdaten hinzugefügt werden.

## Claims

1. A method of producing a three-dimensional object description of a located spatial object - in particular a building - from stereoscopic pairs of aerial pictures, in which
- from the pairs of aerial pictures two-dimensional image data and stereoscopic parameter data are stored digitised as three-dimensional raw data in a data processing installation,
- two-dimensional orthophoto-data and three-dimensional object data are calculated from the raw data, and
- external object-specific factual data are associated with the three-dimensional object data to form a three-dimensional object description,
**characterised by** the method steps:
- associating external object-specific factual data with the two-dimensional orthophoto-data for forming object-specific orthophoto-hybrid data sets,
- storing the orthophoto-hybrid data sets on a host computer of a networked data processing installation, which host computer is connected to client computers by way of data transmission lines,
- transmitting the orthophoto-hybrid data sets to a client computer by way of the data transmission lines,
- selecting an object-specific orthophoto-hybrid data set at the client computer by inputting the object-specific factual data,
- transmitting the selected object-specific factual data to the host computer by way of the data transmission lines,
- calculating an object-specific three-dimensional object data set from the three-dimensional raw data which are stored in the host computer and which form the basis for the selected object-specific orthophoto-hybrid data set, and
- transmitting the three-dimensional object data set with the object-specific factual data as a three-dimensional object description to the client computer by way of the data transmission lines.

2. A method according to claim 1 **characterised in that** the object is the roof of a building.

3. A method according to claim 2 **characterised in that** the factual data include street data of the building.

4. A method according to claim 1 **characterised in that** the factual data include land register data.

5. A method according to claim 1 **characterised in that** the orthophoto-data are graphically represented at least on a client computer.

6. A method according to claim 1 **characterised in that** the factual data of the orthophoto-hybrid data sets are graphically represented.

7. A method according to claim 1 **characterised in that** the orthophoto-hybrid data and the factual data are graphically represented on a client computer jointly in the form of a graphical user interface, wherein a specific orthophoto-hybrid data set can be interactively graphically selected.

8. A method according to claim 1 **characterised in that** the host computer is an Internet server.

9. A method according to claim 1 **characterised in that** the data network is the World Wide Web.

10. A method according to claim 2 **characterised in that** determination of the roof shape and/or the roof area is effected in the host computer by at least partially automated image analysis processes.

11. A method according to claim 1 **characterised in that** data compression is effected in each case prior to a transmission of data by way of data transmission lines.

12. A method according to claim 1 **characterised in that** a security enquiry is executed prior to calculation of the object-specific three-dimensional object data set.

13. A method according to claim 1 **characterised in that** further external factual data are added to the object-specific three-dimensional object data set.

## Revendications

1. Procédé pour produire une description d'objet tridimensionnelle d'un objet spatial localisé, notamment d'un bâtiment, à partir de paires de photographies aériennes stéréoscopiques où
- à partir des paires de photographies aériennes, des données d'image bidimensionnelles et des données de paramètre stéréoscopiques sont stockées sous forme numérique comme données brutes tridimensionnelles dans une installation de traitement de données,
- à partir des données brutes, des données orthophotographiques bidimensionnelles et des données d'objet tridimensionnelles sont calculées,
- aux données d'objet tridimensionnelles, des données de matière externes, spécifiques à l'objet, sont associées pour former une description d'objet tridimensionnelle,
**caractérisé par** les étapes de procédé :
- association de données de matière externes spécifiques à l'objet aux données orthophotographiques bidimensionnelles pour former des jeux de données hybrides orthophotographiques,
- stockage des jeux de données hybrides orthophotographiques dans un calculateur central d'une installation de traitement de données en forme de réseau qui est raccordé par des lignes de transmission de données à des calculateurs clients,
- transmission des jeux de données hybrides orthophotographiques par les lignes de transmission de données à un calculateur client,
- sélection d'un jeu de données hybrides orthophotographiques spécifique à l'objet au calculateur client par l'entrée des données de matière spécifiques à l'objet,
- transmission des données de matière spécifiques à l'objet sélectionnées par les lignes de transmission de données au calculateur central,
- calcul d'un jeu de données d'objet tridimensionnel spécifique à l'objet à partir des données brutes tridimensionnelles stockées dans le calculateur central, sur lesquelles est basé le jeu de données hybrides orthophotographique spécifique à l'objet sélectionné,
- transmission du jeu de données d'objet tridimensionnel avec les données de matière spécifiques à l'objet en tant que description d'objet tridimensionnelle par les lignes de transmission de données au calculateur client.

2. Procédé selon la revendication 1, **caractérisé en ce que** l'objet est le toit d'un bâtiment.

3. Procédé selon la revendication 2, **caractérisé en ce que** les données de matière contiennent des données de rue du bâtiment.

4. Procédé selon la revendication 1, **caractérisé en ce que** les données de matière contiennent des données du cadastre.

5. Procédé selon la revendication 1, **caractérisé en ce que** les données orthophotographiques sont représentées d'une manière graphique au moins sur un calculateur client.

6. Procédé selon la revendication 1, **caractérisé en ce que** les données de matière des jeux de données hybrides orthophotographiques sont représentées d'une manière graphique.

7. Procédé selon la revendication 1, **caractérisé en ce que** les données hybrides orthophotographiques et les données de matière sont représentées d'une manière graphique sur un calculateur client ensemble sous la forme d'une surface d'utilisateur graphique, où un jeu de données hybride orthophotographique spécifique peut être sélectionné graphiquement d'une manière interactive.

8. Procédé selon la revendication 1, **caractérisé en ce que** le calculateur central est un serveur internet.

9. Procédé selon la revendication 1, **caractérisé en ce que** le réseau de données est le Word-Wide-Web.

10. Procédé selon la revendication 2, **caractérisé en ce qu'**a lieu dans le calculateur central, par des procédés d'analyse d'image au moins partiellement automatisés, la détermination de la forme du toit et/ou de la face du toit.

11. Procédé selon la revendication 1, **caractérisé en ce que**, respectivement avant une transmission de données par des lignes de transmission de données, une compression de données est effectuée.

12. Procédé selon la revendication 1, **caractérisé en ce qu'**avant le calcul du jeu de données d'objet tridimensionnel spécifique à l'objet, une interrogation de sécurité est réalisée en amont.

13. Procédé selon la revendication 1, **caractérisé en ce que** d'autres données de matière externes sont ajoutées au jeu de données d'objet tridimensionnel spécifique à l'objet.
